(19) Europäisches Patentamt
European Patent Office
Office européen des brevets

(11) Veröffentlichungsnummer: **0 001 786**
**B1**

(12) **EUROPÄISCHE PATENTSCHRIFT**

(45) Veröffentlichungstag der Patentschrift: **05.01.83**

(21) Anmeldenummer: **78101179.6**

(22) Anmeldetag: **19.10.78**

(51) Int. Cl.³: **C 08 G 69/26,** C 08 G 69/36, C 07 C 87/14

# (54) Kristallines Polyamid, seine Verwendung und Diamine.

(30) Priorität: **28.10.77 CH 13146/77**

(43) Veröffentlichungstag der Anmeldung: **16.05.79 Patentblatt 79/10**

(45) Bekanntmachung des Hinweises auf die Patenterteilung: **05.01.83 Patentblatt 83/1**

(84) Benannte Vertragsstaaten: **CH DE FR GB NL**

(56) Entgegenhaltungen:
**CH - A - 388 624**
**DE - A - 2 312 218**
**DE - A - 2 549 403**
**US - A - 3 563 959**

(73) Patentinhaber: **CIBA-GEIGY AG**
**Patentabteilung Postfach**
**CH-4002 Basel (CH)**

(72) Erfinder: **Pfeifer, Josef, Dr.**
**Grossmatthof**
**CH-4106 Therwil (CH)**
Erfinder: **Peter, Heinz, Dr.**
**Tulpenweg 5**
**CH-4310 Rheinfelden (CH)**

**EP 0 001 786 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Kristallines Polyamid, seine Verwendung und Diamine

Die vorliegende Erfindung betrifft neue teil kristalline Polyamide, Verfahren zu deren Herstellung sowie deren Verwendung zur Herstellung von Formkörpern.

In der US Patentschrift 2.752.328 sind lineare faserbildende Polyamide aus Terephthalsäure und Alkylendiaminen mit 6 bis 8 C-Atomen in der Kette, die in den Stellungen 2 bis 5 durch eine oder zwei Methylgruppen substituiert sein können, beschrieben, wobei das Diamin insgesamt höchstens 9 C-Atome aufweist. Bevorzugte Diamine sind z.B. 2,5-Dimethylhexamethylendiamin, 2- oder 3-Methylhexamethylendiamin und 4-Methyloctamethylendiamin. Diese vorbekannten kristallinen Polyamide lassen aber hinsichtlich der Wasseraufnahme, der Hydrolysebeständigkeit und/oder der Dimensionsstabilität unter Feuchtigkeitseinwirkung zu wünschen übrig.

Ferner ist bekannt, dass Polyamide aus aliphatischen oder aromatischen Dicarbonsäuren und sperrigen Diaminen stets transparent, d.h. amorph sind; vgl. z.B. die US Patentschriften 2.864.807, 3.150.117 und 3.352.831, die belgische Patentschrift 677.650 und die deutsche Offenlegungsschrift 1.720.513. Diese letztgenannte deutsche Offenlegungsschrift beschreibt zwar generisch kochbeständige transparente Polyamide aus aromatischen Dicarbonsäuren und gegebenenfalls alkylsubstituierten Alkylendiaminen mit bis zu 10 C-Atomen in der Kette, die an mindestens einem der beiden endständigen C-Atome durch eine Alkylgruppe mit 1—4 C-Atomen substituiert sind. Die konkrete Offenbarung beschränkt sich jedoch auf transparente Polyamide aus aromatischen Dicarbonsäuren und Alkylendiaminen der vorerwähnten Art mit höchstens 7 C-Atomen in der Kette.

Aufgabe der Erfindung war daher die Bereitstellung von neuen teil kristallinen Polyamiden mit hoher Wärmeformbeständigkeit, mit geringerer Wasseraufnahme, verbesserter Hydrolysebeständigkeit und erhöhter Dimensionsstabilität unter Feuchtigkeitseinwirkung, die sich zur Herstellung von Spritzgussmaterialien und besonders auch zur Herstellung von Filamenten und Fasern eignen. Es wurde nun gefunden, dass sich überraschenderweise aus aromatischen Dicarbonsäuren und Alkylendiaminen mit sperrigen Seitenketten neue kristalline Polyamide herstellen lassen.

Gegenstand der Erfindung sind daher neue teilkristalline Polyamide, die dadurch erhalten werden können, dass man in wesentlichen stöchiometrische Mengen von Terephthalsäure oder einem amidbildenden Derivat davon und einem Diamin der Formel I

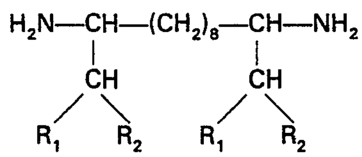

(I)

in der

$R_1$ Alkyl mit 1—4 C-Atomen,

$R_2$ Alkyl mit 1—8 C-Atomen oder

$R_1$ und $R_2$ zusammen mit dem Bindungs-C-Atom je Cycloalkyl mit 4—6 C-Atomen bedeuten, zur Reaktion bringt,

wobei das Reaktionsgemisch gegebenenfalls bis zu 5 Gew.-% (bezogen auf das Gesamtgemisch) einer Aminocarbonsäure der Formel II

$$HOOC—Z_1—NH_2 \qquad (II),$$

in der $Z_1$ Alkylen mit 5 bis 11 C-Atomen bedeutet, oder eines entsprechenden Lactams oder aber bis zu 30 Gew.-% eines im wesentlichen stöchiometrischen Gemisches einer Dicarbonsäure der Formel III

$$HOOC—Z_2—COOH, \qquad (III),$$

in der $Z_2$ einer aliphatischen Rest mit mindestens 2 C-Atomen oder einen carbocyclisch-aromatischen Rest, in dem die Carbonylgruppen an verschiedene, nicht benachbarte Ring-C-Atome gebunden sind, darstellt, oder eines amidbildenden Derivates davon mit einem Diamin der Formel IV

$$H_2N—Z_3—NH_2, \qquad (IV)$$

in der $Z_3$

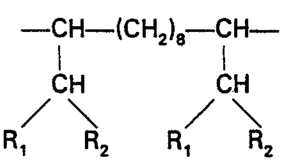

,

geradkettiges Alkylen mit 2—12 C-Atomen oder einen cycloaliphatischen oder araliphatischen Rest bedeutet, enthält und
wobei sich die definitionsgemässen Gewichtsprozente bei amidbildenden Derivaten der Terephthalsäure und der Dicarbonsäure der Formel III auf gleiche funktionelle Gruppen beziehen.

Durch $R_1$ und $R_2$ dargestellte Alkylgruppen können geradkettig oder verzweigt sein, sind aber bevorzugt geradkettig. Als Beispiele definitionsgemässer Alkylgruppen seien erwähnt: die Methyl-, Aethyl-, n-Propyl-, Isopropyl-, n-Butyl-, sek-Butyl-, n-Pentyl-, n-Hexyl-, n-Heptyl- und n-Octylgruppe.

Bilden $R_1$ und $R_2$ zusammen mit dem Bindungs-C-Atom einen Cycloalkylring, so handelt es sich vorzugsweise um Cyclopentyl oder Cyclohexyl.

Stellt $Z_2$ einen aliphatischen Rest dar, so handelt es sich insbesondere um geradkettiges Alkylen mit 2—12 C-Atomen und bevorzugt um geradkettiges Alkylen mit 4—10 C-Atomen. Alkylengruppen $Z_3$ weisen bevorzugt 2—10 C-Atome auf.

Durch $Z_2$ dargestellte carbocyclisch-aromatische Reste können unsubstituiert oder substituiert sein, beispielsweise durch Alkylgruppen mit 1—4 C-Atomen. Dabei handelt es sich beispielsweise um monocyclische, um kondensierte polycyclische oder um unkondensierte bicyclische aromatische Reste, wobei bei letzteren die Aromatenkerne auch über ein Brückenglied, wie —O— oder —$SO_2$—, miteinander verbunden sein können. $Z_2$ stellt insbesondere einen 4,4'-Biphenylen-, 4,4'-Diphenyläther- oder 4,4'-Diphenylsulfonrest, die 2,4-, 3,6- oder 2,7-Naphthylengruppe und vor allem die 1,3-Phenylengruppe und ganz bevorzugt die 1-4-Phenylengruppe dar.

$Z_3$ in der Bedeutung eines cycloaliphatischen Restes stellt z.B. die 1,3-Cyclopentylen-, die 1,3- oder 1,4-Cyclohexylen- oder die 4,4'-Dicyclohexylmethangruppe dar, während als araliphatische Reste $Z_3$ vor allem die 1,4- und 1,3-xylylengruppe in Betracht kommt.

Bevorzugt sind erfindungsgemässe Polyamide, die durch Umsetzung von 100 Gewichtsprozent eines Gemisches aus im wesentlichen stöchiometrischen Mengen Terephtahalsäure oder einem amidbildenden Derivat davon und einem Diamin der Formel I erhalten werden, d.h. Polyamide, die ausschliesslich aus wiederkehrenden Strukturelementen der Formel V

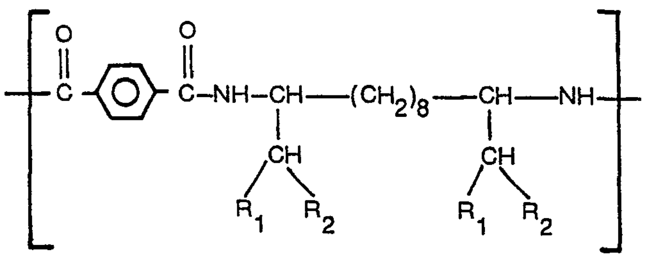

(V)

bestehen,
worin $R_1$ und $R_2$ die unter Formel I angegebene Bedeutung haben.

Besonders bevorzugt sind Homopolyamide der vorerwähnten Art, worin $R_1$ und $R_2$ unabhängig voneinander Alkyl mit 1—4 C-Atomen oder $R_1$ und $R_2$ je zusammen mit dem Bindungs-C-Atom Cyclopentyl oder Cyclohexyl darstellen, und ganz besonders solche, worin $R_1$ Methyl oder Aethyl und $R_2$ Aethyl, n-Propyl oder n-Butyl bedeuten.

Eine weitere besondere Vorzugsform der Erfindung stellen solche Homopolyamide der vorerwähnten Art dar, worin $R_1$ Methyl und $R_2$ Aethyl oder aber $R_1$ Aethyl und $R_2$ Aethyl bedeuten.

Werden bei der Herstellung von Mischpolyamiden Reaktions-mischungen verwendet, welche bis zu 5 Gew.-% einer Aminocarbonsäure der Formel II oder eines entsprechenden Lactams oder bis zu 30 Gew.-% eines Gemisches einer Dicarbonsäure der Formel III (oder eines amidbildenden Derivatives) und eines Diamins der Formel IV enthalten, so sind diese Prozentangaben als Grenzwerte zu betrachten. Es muss stets darauf geachtet werden, dass die resultierenden Polyamide noch Teilkristallinität aufweisen. Je nach Art des Zusatzes zu den Ausgangssubstanzen des Grundpolyamids können die maximal möglichen Mengen nämlich sehr unterschiedlich sein. Handelt es sich beispielsweise bei dem Diamin der Formel I um 4,13-Diamino-3,14-diäthylhexadecan, so kann der Zusatz der übrigen polyamidbildenden Zusätze viel grösser (nämlich bis zu 30 Gew.-%) sein, als in Fällen, wo als Diamin der Formel I 6,15-Diamino-5,16-diäthyleicosan oder 5,14-Diamino-4,15-dimethyloctadecan eingesetzt wird.

Die Grösse des Prozentsatzes des Zusatzes hängt aber auch von dem Zusatz selbst ab. So kann viel mehr an Mischungen von Diaminen der Formel IV mit Adipinsäure und insbesondere mit Isophthalsäure vertragen werden als an Caprolactam.

Bei der Herstellung der erfindungsgemässen Polyamide können als amidbildende Derivate der Terephthalsäure oder der Dicarbonsäuren der Formel III beispielsweise die entsprechenden Dihalogenide, vor allem die Dichloride, ferner Dinitrile, Dialkyl- und Diarylester, besonders Dialkylester mit je 1—4 C-Atomen in den Alkylteilen und Diphenylester verwendet werden.

Die Umsetzung der definitionsgemässen Reaktionskomponenten kann nach an sich bekannten Methoden vorgenommen werden.

Bevorzugt ist die Herstellung nach dem Schmelzpolykondensationsverfahren in mehreren Stufen.

Dabei werden die definitionsgemässen Reaktionskomponenten, z.B. Aminocarbonsäuren der Formel II oder entsprechende Lactame, Gemische aus Terephthalsäure und Diamin der Formel I und gegebenenfalls Gemische aus Dicarbonsäuren der Formel III und Diaminen der Formel IV, insbesondere Salze aus Terephthalsäure und Diaminen der Formel I und gegebenenfalls Salze aus Dicarbonsäuren der Formel III und Diaminen der Formel IV, unter Druck bei Temperaturen zwischen etwa 220 und 300°C in der Schmelze, zweckmässig unter Inertgas, wie Stickstoff, vorkondensiert. Die für die Vorkondensation einzusetzende Salze werden zweckmässig einzeln aus im wesentlichen stöchiometrischen Mengen Terephthalsäure und Diamin der Formel I und gegebenenfalls Dicarbonsäuren der Formel III und Diaminen der Formel IV in geeigneten inerten organischen Lösungsmitteln hergestellt.

Als inerte organische Lösungsmittel eignen sich dabei z.B. cycloaliphatische Alkohole, wie Cyclopentanol und Cyclohexanol, und vor allem aliphatische Alkohole mit bis zu 6 C-Atomen, wie Methanol, Aethanol, n-Propanol, Butanole, Pentanole und Hexanole, sowie gemische derartiger Lösungsmittel mit Wasser.

Das Vorkondensat kann anschliessend entweder bei Temperaturen zwischen etwa 220 und 300°C bei Normaldruck und zweckmässig ebenfalls in Inertgasatmosphäre bis zur Bildung der erfindungsgemässen Polyamide weiterkondensiert werden, wobei man am Ende der Polykondensation gegebenenfalls zum Entgasen des Polyamids Vakuum anlegt, oder aber man führt die Polykondensation des Vorkondensats, gegebenenfalls zusammen mit einer Aminocarbonsäure der Formel II oder einem entsprechenden Lactam, in fester Phase bei Temperaturen bis etwa 20°C unter dem Kristallitschmelzpunkt durch. Die Polykondensation in fester Phase wird zweckmässig im Vakuum oder in Inertgasatmosphäre vorgenommen.

Erfindungsgemässe Polyamide können auch durch Schmelzpolykondensation von Diaminen der Formel I mit im wesentlichen stöchiometrischen Mengen eines aktivierten Esters der Terephthalsäure sowie gegebenenfalls eines Diamins der Formel IV mit einem aktivierten Ester einer Dicarbonsäure der Formel III hergestellt werden. Als aktivierte Ester eignen sich besonders die entsprechenden Diphenylester. Die Reaktionstemperaturen liegen dabei im allgemeinen zwischen etwa 220 und 320°C. Schliesslich können die erfindungsgemässen Polyamide gegebenenfalls auch in an sich bekannter Weise durch Lösungsmittel- oder Grenzflächenpolykondensation hergestellt werden.

Die erfindungsgemäss zu verwendenden Ausgangsprodukte der Formel II, III und IV sind bekannt. Diamine der Formel I, worin $R_1$ Alkyl mit 2—4 C-Atomen und $R_2$ Alkyl mit 1—8 C-Atomen darstellen, sind neu. Diese neuen Diamine, wie auch die restlichen Diamine der Formel I können auf besonders vorteilhafte Weise dadurch hergestellt werden, dass man in 3,12-Stellung entsprechend substituierte 1,2-Diaza-1,5,9-cyclododecatriene oder 1,2-Diazacyclododecane in Gegenwart eines inerten organischen Lösungsmittels katalytisch hydriert.

Die erfindungsgemässen Polyamide sind teilkristallin und zeichnen sich vor allem durch eine geringe Wasseraufnahme, hohe Hydrolysebeständigkeit und/oder gute Dimensionsstabilität unter Feuchtigkeitseinwirkung, gute Wärmeformstabilität verbunden mit verbesserten mechanischen und insbesondere elektrischen Eigenschaften aus.

Die erfindungsgemässen Polyamide können nach an sich bekannten Methoden zu Formkörpern verschiedenster Art verarbeitet werden. Sie eignen sich ganz besonders zur Herstellung von Filamenten und Fasern aus der Schmelze.

Beispiel 1

74,9 g Terephthalsäure werden zusammen mit 800 ml Wasser und 2000 ml Aethanol in einem Kolben, der mit Rührer, Rückflusskühler und Tropftrichter versehen ist, vorgelegt und auf 50°C erwärmt. Unter Rühren lässt man aus dem Tropftrichter 116,6 g 3,12-Diamino-2,13-dimethyltetradecan zufliessen und spült mit 1500 ml Aethanol nach. Beim Erwärmen des Reaktionsgemisches auf 80°C tritt Lösung ein. Anschliessend wird das Reaktionsgemisch auf 5°C abgekühlt, wobei das gebildete Salz ausfällt. Das Salz wird abfiltriert und bei 90°C im Vakuum getrocknet. Ausbeute: 162,5 g (85% d.Th.).

15 g dieses Salzes werden unter Stickstoff in ein Bombenrohr eingeschmolzen und auf 280°C erhitzt. Das Salz schmilzt zunächst zu einer farblosen Flüssigkeit, die nach ca. einer Stunde zu einer opaken Masse erstarrt. Nach 2 Stunden wird die Vorkondensation abgebrochen, und das Vorkondensat wird aus dem Bombenrohr entnommen. Reduzierte Viskosität des Vorkondensats, gemessen an einer 0,5%igen Lösung in m-Kresol bei 25°C = 0,56. Das Vorkondensat wird pulverisiert und in einem Kölbchen unter einem Druck von 13,33 Pa während 12 Stunden bei 280°C in fester Phase polykondensiert. Die reduzierte Viskosität der erhaltenen Polyamids, gemessen als 0,5%ige Lösung in m-Kresol bei 25°C, beträgt 1,37 dl/g. Im Differentialcalorimeter zeigt das Polyamid einen Schmelzpeak mit Maximum bei 305°C und einer Schmelzwärme von 64,06 mF/g. Eine Probe des geschmolzenen Polyamids wird mit Wasser abgeschreckt und dann erneut im Differentialcalorimeter aufgeheizt. Dabei ergeben sich folgende Messwerte: Glasumwandlungstemperatur 148°C; Maximum des Kristallisationspeaks 210°C mit einer Kristallisationswärme von 62,28 mF/g; Maxima des Doppelschmelzpeaks bei 286°C und 308°C mit einer Schmelzwärme von 38,10 mF/g. Das weisse Polyamidpulver wird in einer hydraulischen Presse bei 330°C zu ca. 0,5 mm dicken Plättchen verpresst; Wasseraufnahme nach 7

Tagen Lagern bei 20—25°C und 65% relativer Luftfeuchtigkeit: 1,0 Gew.%; Wasseraufnahme nach 7 Tagen Lagern in Wasser: 1,7 Gew.%.

Beispiel 2

In einem Reaktionsgefäss, das mit Rührer, Tropftrichter und Rückflusskühler versehen ist, werden 11.72 g Terephtalsäure in einem Gemisch von 250 ml Aethanol und 90 ml Wasser auf Rückflusstemperatur erwärmt. Dann tropft man innerhalb von 10 Minuten aus dem Tropftrichter 24,0 g 1,10-Diamino-1,10-dicyclohexyldecan zu. Das Reaktionsgemisch wird während 48 Stunden unter Rückfluss gerührt, dann auf 20—25°C abgekühlt, worauf man das entstandene Salz abfiltriert. Nach dem Trocknen im Vakuum erhält man 34,8 g Salz (98% d.Th.).

15 g dieses Salzes werden wie im Beispiel 1 beschrieben polykondensiert. Die anschliessende Verarbeitung des erhaltenen Polyamids erfolgt bei einer Pressentemperatur von 350°C. Die Eigenschaften des Polyamids sind in der Tabelle 1 zusammengefasst.

Beispiel 3

5,15 g Terephtalsäurediphenylester und 5,05 g 1,10-Diamino-1,10-dicyclopentyldecan werden in einem Kondensationsrohr mit einer Vorrichtung zum Einleiten von Stickstoff bei 210°C aufgeschmolzen. Während Stickstoff über die Schmelze geleitet wird, erhöht man die Temperatur im Verlaufe von 5 Stunden auf 280°C. Während dieser Zeit destilliert ein Teil des abgespaltenen Phenols ab, und die Schmelze erstarrt allmählich zu einer opaken Masse. Nun wird abgekühlt, und der Inhalt des Kondensationsrohres wird pulverisiert. Das noch phenolhaltige Pulver wird in einen Kolben gefüllt und während 9 Stunden unter einem Druck von 3,99 Pa einer Temperatur von 280°C ausgesetzt. Die thermoplastische Vorformung des erhaltenen Polyamids zu dünnen Plättchen wird bei einer Temperatur von 350°C vorgenommen. Die Eigenschaften des Polyamids sind in der Tabelle 1 zusammengefasst.

Beispiel 4

10,0 g 4,13-Diamino-3,14-diäthylhexadecan und 10,06 g Terephthalsäurediphenylester werden in einem Kondensationsrohr unter Stickstoff bei 220°C aufgeschmolzen und während 4 Stunden bei dieser Temperatur belassen. Unter Durchleiten von Stickstoff durch die Schmelze wird anschliessend die Temperatur im Verlaufe von 2 Stunden auf 270°C gesteigert, wobei die Hauptmenge des abgespaltenen Phenols abdestilliert. Nach 30 Minuten evakuiert man vorsichtig auf $1{,}86 \cdot 10^3$ Pa, nach weiteren 90 Minuten schliesslich auf 13,3 Pa. Unter diesen Bedingungen wird noch während 30 Minuten weiterkondensiert. Beim Abkühlen der Schmelze erstarrt sie zu einer weissenopaken Masse. Ein aus der Schmelze gezogener und von Hand verstreckter Faden zeigt unter einem beheizbaren Polarisationsmikroskop einen scharfen Kristallitschmelzpunkt von 235—236°C. Weitere Eigenschaften des Polyamids sind in der Tabelle 1 angegeben.

Beispiel 5

In einem 1-liter Erlenmeyerkolben, der mit Rührer, Tropftrichter und Rückflusskühler ausgestaatet ist, werden 16,61 g Terephthalsäure in einem Gemisch von 300 ml Wasser und 450 ml Aethanol unter Rühren auf 80°C erwärmt. Aus dem Tropftrichter werden 36,86 g 6,15-Diamino-5,16-diäthyleicosan zugetropft. Das erhaltene Gemisch wird nun unter Rückfluss während ca. 5 Stunden gekocht. Anschliessend wird auf 5°C abgekühlt, und das gebildete Salz wird abfiltriert. Den Rückstand trocknet man bei 90°C im Vakuum.

Die Ausbeute beträgt 51,2 g (95,8% d.Th.).

15 g dieses Salzes werden unter Stickstoff in ein Bombenrohr eingeschmolzen und auf 270°C erhitzt. Nach 3 Stunden wird abgekühlt, das erstarrte Vorkondensat wird entnommen und in ein Kondensationsrohr mit einer Vorrichtung zum Einleiten von Stickstoff übergeführt. Unter Stickstoff wird das Vorkondensat bei 270°C aufgeschmolzen und 10 Stunden unter Durchleiten von Stickstoff auf dieser Temperatur gehalten. Beim Abkühlen erstarrt die Schmelze zu einer weissen opaken Masse. Die reduzierte Lösungsviskosität des erhaltenen Polyamids, gemessen als 0,5%ige Lösung in m-Kresol bei 25°C, beträgt 0,75 dl/g.

Ein aus der Schmelze gezogener und von Hand verstreckter Faden zeigt unter dem Polarisationsmikroskop einen scharfen Schmelzpunkt von 224—225°C. Weitere Eigenschaften sind in der Tabelle 1 zusammengefasst.

Beispiel 6

Auf die im Beispiel 2 beschriebene Weise werden 13,98 g Terephthalsäure und 26,3 g 5,14-Diamino-4,15-dimethyloctadecan in einem Gemisch von 340 ml Aethanol und 100 ml Wasser zur Reaktion gebracht. Nach 8 Stunden ist die Salzbildung beendet. Das Salz wird abfiltriert und bei 100°C im Vakuum getrocknet. Ausbeute: 38,3 g Salz (95% d.Th.).

10 g dieses Salzes werden unter Stickstoff in ein Bombenrohr eingeschmolzen und 3 Stunden lang auf 270°C erhitzt. Nach dem Abkühlen auf 20—25°C wird die erstarrte Schmelze aus dem Bombenrohr entnommen und in ein Kondensationsrohr übergeführt. Unter andauerndem Einleiten von

Stickstoff wird das Vorkondensat darin aufgeschmolzen und während 8 Stunden bei einer Temperatur von 270°C in der Schmelze polykondensiert.

Beim Erkalten erstarrt die Schmelze zu einer opaken Masse. Die Eigenschaften des erhaltenen Polyamids sind in der Tabelle 1 zusammengefasst.

Beispiel 7

Wie in Beispiel 1 beschrieben wird zunächst das Salz durch Reaktion von 16,61 g Terephthalsäure und 28,45 g 4,13-Diamino-3,14-dimethylhexadecan in einem Gemisch von 200 ml Wasser und 400 ml Aethanol hergestellt. Ausbeute: 42,5 g (94% d.Th.).

10 g dieses Salzes werden in einem Bombenrohr unter Stickstoff 3 Stunden auf 280°C erhitzt. Nach Abkühlen wird das Vorkondensat aus dem Bombenrohr entnommen und in einem Kondensationsrohr unter andauerndem Durchleiten von $N_2$ 6 Stunden bei 280°C in der Schmelze polykondensiert. Die Eigenschaften des Polyamids sind in der Tabelle 1 zusammengefasst.

Beispiel 8

Auf die in Beispiel 2 beschriebene Weise werden 16,61 g Terephthalsäure mit 39,67 g 6,15-Diamino-5,16-di-n-propyleicosan in einem Gemisch von 400 ml Aethanol und 100 ml Wasser zur Reaktion gebracht. Nach 6 Stunden ist die Salzbildung beendet.

Ausbeute nach Abfiltrieren und Trocknen: 48,8 g (87% d.T.).

10 g dieses Salzes werden unter den in beispiel 6 beschriebenen Bedingungen zu einem Polyamid polykondensiert.

Die Eigenschaften des erhaltenen Polyamids sind in der Tabelle 1 zusammengefasst.

Beispiel 9

Zu einer Aufschlämmung von 38,70 g Terephthalsäure in einem Gemisch von 750 ml Aethanol und 250 ml Wasser gibt man aus einem Tropftrichter 72,98 g 4,13-Diamino-3,14-diäthylhexadecan unter Rühren und Rückflusskochen.

Nach 8 Stunden lässt man erkalten und filtriert das gebildete Salz ab. Nach Trocknen bei 90°C im Vakuum erhält man 107,4 g Salz (D) (96% der Theorie).

9,5 g dieses Salzes werden mit 0,5 g 11-Aminoundecansäure vermischt und unter Stickstoff in einer Bombenrohr eingeschmolzen und 3 Stunden lang in einem Salzbad von 270°C eingetaucht, wobei das Gemisch zu einer farblosen Flüssigkeit schmilzt und unter Wasserabspaltung zu einem niedermolekularen Vorkondensat polykondensiert. Nach Abkühlen wird die erstarrte opake Masse in einem offenen Polykondensationsrohr unte Stickstoff bei 270°C wieder aufgeschmolzen und bei dieser Temperatur 8 Stunden lang unter Luftausschluss polykondensiert, wobei das Reaktionswasser laufend mit den durch die Schmelze geleiteten Stickstoff entfernt wird.

Die Eigenschaften des Copolyamids sind in Tabelle 2 zusammengefasst.

Beispiele 10—11

22,87 g 4,13-Diamino-3,14-diäthylhexadecan werden in 300 ml Aethanol auf 50°C aufgeheizt.

Zu dieser Lösung gibt man in einer Portions 12,13 g Isophthalsäure. Nach kurzer Zeit löst sich die Isophthalsäure vollständig auf, während die Lösung durch die Neutralisationswärme den Siedepunkt erreicht.

Nach wenigen Minuten beginnt das gebildete Salz auszufallen. Nach Abkühlen auf Raumtemperatur wird filtriert und das Salz im Vakuum bei 80°C getrocknet.

Man erhält 32,2 g Salz (E) (92% d.Th.).

2 g dieses Salzes (E) werden mit 8 g Salz (D) aus Beispiel 9 vermischt und unter den dort angegebenen Bedingungen zu einem Copolyamid polykondensiert.

Gleichermassen wird mit einer Mischung aus 2,5 g Salz (E) aus der voranstehenden Beschreibung und 7,5 g Salz (D) aus Beispiel 9 verfahren.

Die Eigenschaften der beiden Copolyamide sind in Tabelle 2 zusammengestellt.

Beispiele 12—14

14,61 g Adipinsäure werden in 100 ml Aethanol auf 50°C erwärmt und mit einer Lösung von 31,32 g 4,13-Diamino-3,14-diäthylhexadecan in 80 ml Aethanol versetzt.

Die dabei entstehende klare Lösung wird nach und nach auf —5°C abgekühlt, wobei das Salz ausfällt.

Nach Abfiltrieren und Trocknen erhält man 31,4 g Salz (F) (68% d.Th.).

Verschiedene Salzmischungen aus dem hier beschriebenen Salz (F) und Salz (D) aus Beispiel 9 werden unter den in Beispiel 9 beschriebenen Bedingungen polykondensiert.

Beispiel 15

0,404 g 1,12-Diaminododecan, 0,407 g Sebazinsäure und 15,46 g Salz (D) aus Beispiel 9 werden in ein Bombenrohr eingewogen und wie in Beispiel 9 beschrieben polykondensiert.

Eigenschaften des Copolyamids siehe Tabelle 2.

Beispiel 16

In gleicher Weise werden 0,303 g 1,12-Diaminododecan und 0,249 g Terephthalsäure mit 10,04 g Salz (D) aus Beispiel 9 vermischt und in der dort beschriebenen Art und Weise polykondensiert.

Die Eigenschaften des Copolyamids sind in Tabelle 2 aufgeführt.

TABELLE 1

| Beispiel Nr. | Säure | Diamin | reduz. Lösungsviskosität 1) | Glasumwandlungstemperatur (DSC) °C | Schmelzpunkt (DSC) °C | Schmelzwärme (DSC) mF/g | Wasseraufnahme nach 1 Woche Lagern bei 20–25°C/65% relat. Luftfeuchtigkeit. Gew. % |
|---|---|---|---|---|---|---|---|
| 2 | TPS | 1,10-Diamino-1,10-dicyclohexyldecan | 0,88 | 172 | 332 | 51,9 | 0,8 |
| 3 | TPS | 1,10-Diamino-1,10-dicyclopentyldecan | 0.72 2) | 163 | 342 | 77,9 | 0,7 |
| 4 | TPS | 4,13-Diamino-3,14-diäthylhexadecan | 0.78 | 150–160 3) | 235 | 49,8 | 0,4 |
| 5 | TPS | 6,15-Diamino-5,16-diäthyleicosan | 0,75 | 150–160 3) | 225 | 40,2 | 0,2 |
| 6 | TPS | 5,14-Diamino-4,15-dimethyloctadecan | 0,82 | 151 | 215 | 29,7 | 0,5 |
| 7 | TPS | 4,13-Diamino-3,14-dimethylhexadecan | 1,05 | 153 | 273 | 30,1 | 0,6 |
| 8 | TPS | 6,15-Diamino-5,16-di-n-propyleicosan | 0,86 | 150–160 3) | 223 | 41,9 | 0,2 |

TPS = Terephthalsäure

DSC = Gemessen in Differentialcalorimeter

1) gemessen als 0,5%ige Lösung bei 25°C in m-Kresol (dl/g)

2) gemessen als 0,5%ige Lösung bei 25°C in Dichloressigsäure (dl/g)

3) im DSC nicht genau auswertbar

TABELLE 2

Copolyamide auf Basis von Terephthalsäure / 4,13-Diamino-3,14-diäthylhexadecan mit Anteilen von anderen Polyamidkomponenten

| Beispiel Nr. | Basiskomponente für den zusätzlichen Polyamidteil | Zusatzmenge Gew. % | red. Lösungsviskosität | Glasumwandlungstemperatur (DSC) °C | Schmelzpunkt (DSC) °C | Schmelzwärme (DSC) mF/g |
|---|---|---|---|---|---|---|
| 9 | 11-Aminoundecansäure | 5 | 0,63 | 151 | 215 | 16,7 |
| 10 | IPS/4,13-Diamino-3,14-diäthylhexadecan (Salz E) | 20 | 0,65 | 156 | 204 | 16,7 |
| 11 | IPS/4,13-Diamino-3,14-diäthylhexadecan (Salz E) | 25 | 0.69 | 147 | 198 | 9,6 |
| 12 | ADS/4,13-Diamino-3,14-diäthylhexadecan (Salz F) | 5 | 0,70 | 130–150 1) | 229 | 67,4 |
| 13 | ADS/4,13-Diamino-3,14-diäthylhexadecan (Salz F) | 10 | 0,83 | 130–150 1) | 221 | 56,1 |
| 14 | ADS/4,13-Diamino-3,14-diäthylhexadecan (Salz F) | 20 | 0,67 | 130–150 1) | 206 | 51,1 |
| 15 | 12,10-Salz | 5 | 0,74 | 147 | 215 | 20,1 |
| 16 | TPS/1,12-Diaminododecan | 5 | 0,73 | 150–160 | 225 | 51,1 |

IPS = Isophthalsäure

ADS = Adipinsäure

12,10-Salz = Salz aus äquivalenten Mengen 1,12-Diaminododecan und Sebazinsäure

1) = im DSC nicht genau auswertbar

Die in den beispielen 1—8 verwendeten Diamine können wie folgt hergestellt werden.

*a) 3,12-Diamino-2,13-dimethyltetradecan*

250 g (1 Mol) 3,12-Diisopropyl-1,2-diaza-1,5,9-cyclododecatrien (Diastereomerengemisch) werden in einem Rührautoklaven in 1000 ml t-Butanol gelöst. Nach der Zugabe von 25 g eines Rhodium-Aluminiumoxid-katalysators (5 Gew.% Rh) wird Wasserstoff bis zu einem Druck von 130—150 bar aufgepresst, worauf man bis zur Beendigung der Wasserstoffaufnahme bei 150—180°C hydriert. Nach dem Erkalten wird der überschüssige Wasserstoff abgeblasen, die Suspension wird aus dem Autoklaven herausgesaugt, und der Katalysator wird über ein wenig "Hyflo"® (Filterhilfsmittel, der Firma Johns-Manville Sales Corp. USA) abgenutscht. Das Filtrat wird am Rotationsverdampfer eingeengt, und das Produkt wird durch Destillation gereinigt. Man erhält als Hauptfraktion 238 g (94% d.Th.) 3,12-Diamino-2,13-dimethyltetradecan als farbloses Oel [Kp. 106—109°C/1,333 Pa; $n_D^{20} = 1,4600$; IR (flüssig) u.a. banden bei 3355, 3278, 1613 $cm^{-1}$].

*b) 5,14-Diamino-4,15-dimethyloctadecan*

Verwendet man wie unter a) angegeben bei sonst gleicher Arbeitsweise anstelle von 250 g (1 Mol) 3,12-Diisopropyl-1,2-diaza-1,5,9-cyclododecatrien 61 g (0,2 Mol) 3,12-Di-(2-pentyl-1,2-diaza-1,5,9-cyclododecatrien (Diastereomerengemisch) und entsprechend verkleinerte Mengen an Katalysator und Lösungsmittel, so erhält man als Hauptfraktion 48,4 g (77% d.Th.) 5,14-Diamino-4,15-dimethyloctadecan als farbloses Oel [Kp. 155—159°C/3,999 Pa; $n_D^{20} = 1,4632$; IR (flüssig) u.a. Banden bei 3246, 1613 $cm^{-1}$].

*c) 4,13-Diamino-3,14-diäthylhexadecan*

Verwendet man wie unter a) angegeben bei sonst gleicher Arbeitsweise anstelle von 250 g (1 Mol) 3,12-Diisopropyl-1,2-diaza-1,5,9-cyclododecatrien 49 g (0,159 Mol) 3,12-Di-(3-pentyl)-1,2-diazacyclododecan und entsprechend verkleinerte Mengen an Katalysator und Lösungsmittel, so erhält man nach chromatographischer Reinigung und Destillation 26,8 g (54% d.Th.) 4,13-Diamino-3,14-diäthylhexadecan als farbloses Oel [Kp. 141—143°C/5,33 Pa; $n_D^{20} = 1,4666$; IR (flüssig) u.a. Banden bei 3378, 3278, 1613 $cm^{-1}$].

*d) 1,10-Diamino-1,10-dicyclopentyldecan*

Verwendet man wie unter a) angegeben bei sonst gleicher Arbeitsweise anstelle von 250 g (1 Mol) 3,12-Diisopropyl-1,2-diaza-1,5,9-cyclododecatrien 200 g (0,666 Mol) rohes 3,12-Dicyclopentyl-1,2-diaza-1,5,9-cyclododecatrien (Diastereomerengemisch) und entsprechend verkleinerte Mengen an Katalysator und Lösungsmittel, so erhält man nach chromatographischer Reinigung und Destillation 39,2 g (19% d.Th.) 1,10-Diamino-1,10-dicyclopentyldecan als farbloses Oel [Kp. 174—178°C/2,66 Pa; $n_D^{20} = 1,4885$; IR (flüssig) u.a. banden bei 3355, 3278, 1613 $cm^{-1}$].

*e) 1,10-Diamino-1,10-dicyclohexyldecan*

Verwendet man wie unter a) angegeben bei sonst gleicher Arbeitsweise anstelle von 250 g (1 Mol) 3,12-Diisopropyl-1,2-diaza-1,5,9-cyclododecatrien 328,5 g (1 Mol) 3,12-Dicyclohexyl-1,2-diaza-1,5,9-cyclododecatrien (Diastereomerengemisch) und entsprechende Mengen an Katalysator und Lösungsmittel, so erhält man als Hauptfraktion 304 g (90% d.Th.) 1,10 Diamino-1,10-dicyclohexyldecan als farbloses Oel [Kp. 190—193°C/6,66 Pa; $n_D^{20} = 1,4944$; IR (flüssig) u.a. Banden bei 3355, 3278, 1613 $cm^{-1}$].

*f) 6,15-Diamino-5,16-diäthyleicosan*

Verwendet man wie unter a) angegeben bei sonst gleicher Arbeitsweise anstelle von 250 g (1 Mol) 3,12-Diisopropyl-1,2-diaza-1,5,9-cyclododecatrien 74,8 g (0,2 Mol) 3,12-Di-(3-heptyl)-1,2-diazacyclododecan (Diastereomerengemisch) und entsprechend verkleinerte Mengen an Katalysator und Lösungsmittel, so erhält man nach chromatographischer Reinigung und Destillation 29,9 g (40% d.Th.) 6,15-Diamino-5,16-diäthyleicosan als farbloses Oel [Kp. 170°C/1,33 Pa; $n_D^{20} = 1,4662$; IR (flüssig) u.a. Banden bei 3278, 1613 $cm^{-1}$].

Die Herstellung der als Ausgangsprodukte verwendeten 1,2-Diaza-1,5,9-cyclododecatriene bzw. 1,2-Diazacyclododecane kann nach den in den deutschen Offenlegungsschriften 2.330.097 und 2.549.403 beschriebenen Methoden vorgenommen werden.

*g) 4,13-Diamino-3,14-dimethylhexadecan*

Verwendet man wie unter a) angegeben bei sonst gleicher Arbeitsweise anstelle von 250 g (1 Mol) 3,12-Diisopropyl-1,2-diaza-1,5,9-cyclododecatrien 87,3 g (0,31 Mol) 3,12-Di-(2-butyl)-1,2-diaza-1,5,9-cyclododecatrien (Diastereomerengemisch) und entsprechend verkleinerte Mengen an Katalysator und Lösungsmittel, so erhält man als Hauptfraktion 74,7 g (85% d.Th.) 4,13-Diamino-3,14-dimethylhexadecan als farbloses Oel [Kp. 143—5°C/6,66 Pa; $n_D^{20} = 1,4639$; IR (flüssig) u.a. Banden bei 3330, 1626 $cm^{-1}$].

*h) 6,15-Diamino-5,16-dipropyleicosan*

Verwendet man wie unter a) angegeben bei sonst gleicher Arbeitsweise anstelle von 250 g (1 Mol) 3,12-Diisopropyl-1,2-diaza-1,5,9-cyclododecatrien 35,9 g (0,09 Mol) rohes 3,12-Di-(4-octyl)-1,2-diaza-1,5,9-cyclododecatrien und entsprechend verkleinerte Mengen an Katalysator und Lösungsmittel, so erhält man nach chromatographischer Reinigung und Kugelrohrdestillation 8,8 g (24% dTh.) 6,15-Diamino-5,16-dipropyleicosan als farbloses Oel [$n_D^{20}$ = 1,4655; IR (flüssig) u.a. Banden bei 3380, 3300, 1623].

**Patentansprüche**

1. Ein teilkristallines Polyamid, erhältlich durch Umsetzung von im wesentlichen stöchiometrischen Mengen von Terephthalsäure oder einem amidbildenden Derivat davon und einem Diamin der Formel I

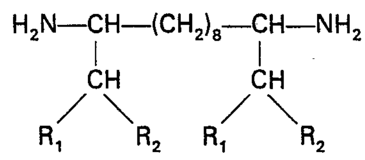 ,  (I)

in der

$R_1$ Alkyl mit 1—4 C-Atomen,

$R_2$ Alkyl mit 1—8 C-Atomen oder

$R_1$ und $R_2$ zusammen mit dem Bindungs-C-Atom je Cycloalkyl mit 4—6 C-Atomen bedeuten, wobei das Reaktionsgemisch gegebenenfalls bis zu 5 Gew.-% (bezogen auf das gesamtgemisch) einer Aminocarbonsäure der Formel II

$$HOOC—Z_1—NH_2 \quad (II),$$

in der $Z_1$ Alkylen mit 5 bis 11 C-Atomen bedeutet, oder eines entsprechenden Lactams oder aber bis zu 30 Gew.-% eines im wesentlichen stöchiometrischen Gemisches einer Dicarbonsäure der Formel III

$$HOOC—Z_2—COOH, \quad (III),$$

in der $Z_2$ einen aliphatischen Rest mit mindestens 2 C-Atomen oder einen carbocyclisch-aromatischen Rest, in dem die Carbonylgruppen an verschiedene, nicht benachbarte Ring-C-Atome gebunden sind, darstellt, oder eines amidbildenden Derivatives davon mit einem Diamin der Formel IV

$$H_2N—Z_3—NH_2, \quad (IV)$$

in der $Z_3$

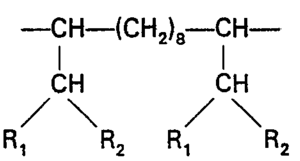 ,

geradkettiges Alkylen mit 2—12 C-Atomen oder einen cycloaliphatischen oder araliphatischen Rest bedeutet,

enthält und

wobei sich die definitionsgemässen Gewichtsprozente bei amidbildenden Derivaten der Terephthalsäure und der Dicarbonsäure der Formel III auf gleiche funktionelle Gruppen beziehen.

2. Ein Polyamid nach Anspruch 1, das durch Umsetzung von 100 Gewichtsprozent eines Gemisches aus im wesentlichen stöchiometrischen Mengen Terephthalsäure oder einem amidbildenden Derivat davon und einen Diamin der Formel I erhältlich ist.

3. Ein Polyamid nach Anspruch 1, das durch Umsetzung eines Reaktionsgemisches erhältlich ist, welches als Diamin der Formel I das 4,13-Diamino-3,14-diäthylhexadecan und gegebenenfalls bis zu 5 Gew.-% Aminocarbonsäure der Formel II oder des entsprechenden Lactams oder aber bis zu 30 Gew.-% eines Gemisches aus im wesentlichen stöchiometrischen Mengen einer Dicarbonsäure der Formel III oder eines amidbildenden Derivatives davon und eines Diamins der Formel IV enthält.

4. Ein Polyamid nach Anspruch 1, das durch Umsetzung von 100 Gewichtsprozent eines Gemisches aus im wesentlichen stöchiometrischen Mengen Terephthalsäure oder einem amidbildenden Derivat davon und einem Diamin der Formel I erhältlich ist, worin $R_1$ und $R_2$ unabhängig voneinander

Alkyl mit 1—4 C-Atomen oder $R_1$ und $R_2$ je zusammen mit dem Bindungs-C-Atom Cyclopentyl oder Cyclohexyl darstellen.

5. Ein Polyamid nach Anspruch 1, das durch Umsetzung von 100 Gewichtsprozent eines Gemisches aus im wesentlichen stöchiometrischen Mengen Terephthalsäure oder einem amidbildenden Derivat davon und einem Diamin der Formel I erhältlich ist, worin $R_1$ Methyl oder Aethyl und $R_2$ Aethyl, n-Propyl oder n-Butyl darstellen.

6. Ein Polyamid nach Anspruch 1, das durch Umsetzung von 100 Gewichtsprozent eines Gemisches aus im wesentlichen stöchiometrischen Mengen Terephthalsäure oder einem amidbildenden Derivat davon und einem Diamin der Formel I erhältlich ist, worin $R_1$ Methyl und $R_2$ Aethyl oder aber $R_1$ Aethyl und $R_2$ Aethyl darstellen.

7. Verwendung eines Polyamids nach Anspruch 1 zur Herstellung von Formkörpern, besonders Filamenten und Fasern aus der Schmelze.

8. Ein Diamin der Formel Ia

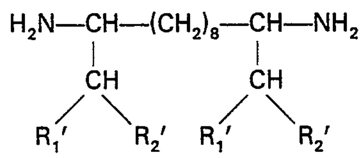

(Ia),

worin $R_1'$ Alkyl mit 2—4 C-Atomen und $R_2'$ Alkyl mit 1—8 C-Atomen bedeuten.

**Claims**

1. A partially crystalline polyamide obtainable by reaction of essentially stoichiometric amounts of terephthalic acid, or of an amide-forming derivative thereof, with a diamine of the formula

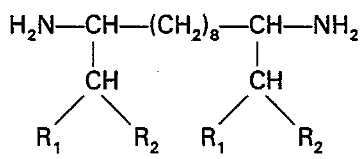

(I)

in which

$R_1$ is alkyl having 1—4 C atoms,

$R_2$ is alkyl having 1—8 C atoms, or

$R_1$ and $R_2$ together with the linkage C atom to which they are attached are in both cases cycloalkyl having 4—6 C atoms,

in which process the reaction mixture contains optionally up to 5% by weight (relative to the total mixture) of an aminocarboxylic acid of the formula II

$$HOOC—Z_1—NH_2 \quad (II)$$

in which $Z_1$ is alkylene having 5 to 11 C atoms, or of a corresponding lactam, or alternatively up to 30% by weight of an essentially stoichiometric mixture of a dicarboxylic acid of the formula III

$$HOOC—Z_2—COOH \quad (III)$$

in which $Z_2$ is an aliphatic radical having at least 2 C atoms, or a carbocyclic-aromatic radical in which the carbonyl groups are bound to different ring C atoms which are not adjacent, or of an amide-forming derivative thereof, with a diamine of the formula IV

$$H_2N—Z_3—NH_2 \quad (IV)$$

in which $Z_3$ is

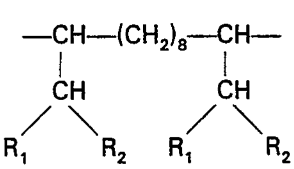

straight-chain alkylene having 2—12 C atoms, or a cycloaliphatic or araliphatic radical; and wherein the defined weight percentages in the case of amide-forming derivatives of terephthalic acid and of the dicarboxylic acid of the formula III relative to identical functional groups.

2. A polyamide according to Claim 1, obtainable by reaction of 100 per cent by weight of a mixture of essentially stoichiometric amounts of terephthalic acid, or of an amide-forming derivative thereof, and a diamine of the formula I.

3. A polyamide according to Claim 1, obtainable by reaction of a reaction mixture containing, as diamine of the formula I, 4,13-diamino-3,14-diethylhexadecane and optionally up to 5% by weight of an aminocarboxylic acid of the formula II or of the corresponding lactam, or alternatively up to 30% by weight of a mixture of essentially stoichiometric amounts of a dicarboxylic acid of the formula III, or of an amide-forming derivative thereof, and a diamine of the formula IV.

4. A polyamide according to Claim 1, obtainable by reaction of 100 per cent by weight of a mixture of essentially stoichiometric amounts of terephthalic acid, or of an amide-forming derivative thereof, and a diamine of the formula I in which $R_1$ and $R_2$ independently of one another are alkyl having 1—4 C atoms, or $R_1$ and $R_2$ together with the linkage C atom to which they are attached are in both cases cyclopentyl or cyclohexyl.

5. A polyamide according to Claim 1, obtainable by reaction of 100 per cent by weight of a mixture of essentially stoichiometric amounts of terephthalic acid, or of an amide-forming derivative thereof, and a diamine of the formula I in which $R_1$ is methyl or ethyl, and $R_2$ is ethyl, n-propyl or n-butyl.

6. A polyamide according to Claim 1, obtainable by reaction of 100 per cent by weight of a mixture of essentially stoichiometric amounts of terephthalic acid, or of an amide-forming derivative thereof, and a diamine of the formula I in which $R_1$ is methyl, and $R_2$ is ethyl, or alternatively $R_1$ is ethyl and $R_2$ is ethyl.

7. Use of a polyamide according to Claim 1 for producing moulded products, particularly filaments and fibres, from the melt.

8. A diamine of the formula Ia

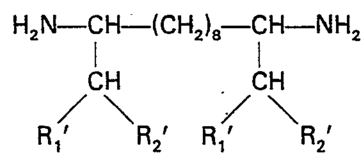 (Ia)

in which $R_1'$ is alkyl having 2—4 C atoms, and $R_2'$ is alkyl having 1—8 C atoms.

**Revendications**

1. Polyamide partiellement cristallisé qui peut être obtenu par réaction de quantités à peu près stoechiométriques d'acide téréphtalique, ou d'un dérivé amidogène de celui-ci, et d'une diamine répondant à la formule I

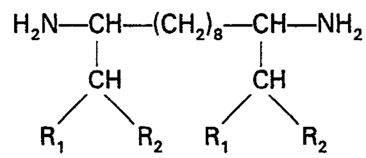 (I)

dans laquelle

$R_1$ représente un alkyle en $C_1$—$C_4$,

$R_2$ représente un alkyle en $C_1$—$C_8$ ou

$R_1$ et $R_2$ forment ensemble et avec l'atome de carbone qui les unit un radical cycloalkyle en $C_1$—$C_8$,

le mélange réactionnel contenant éventuellement jusqu'à 5% en poids (par rapport au mélange total) d'un acide amino-carboxylique répondant à la formule II

$$HOOC—Z_1—NH_2 \quad (II)$$

dans laquelle $Z_1$ représente un alkylène en $C_5$—$C_{11}$, ou d'un lactame correspondant, ou encore jusqu'à 30% en poids d'un mélange, en des proportions à peu près stoechiométriques, d'un acide dicarboxylique répondant à la formule III

$$HOOC—Z_2—COOH \quad (III)$$

dans laquelle $Z_2$ représente un radical aliphatique contenant au moins deux atomes de carbone ou un radical carbocyclique aromatique sur lequel les groupes carbonyles sont fixés à des atomes de carbone du cycle qui ne sont pas voisins, ou d'un dérivé amidogène de celui-ci, et d'une diamine répondant à la formule IV

$$H_2N—Z_3—NH_2 \qquad (IV)$$

dans laquelle $Z_3$ représente

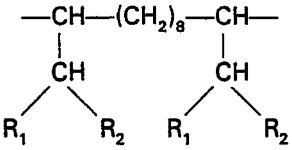
,

un alkylène linéaire contenant de 2 à 12 atomes de carbone ou un radical cycloaliphatique ou araliphatique, les pourcentages pondéraux dont il est question dans les définitions étant rapportés, dans le cas de dérivés amidogènes de l'acide téréphtalique ou de l'acide dicarboxylique de formule III, à des groupes fonctionnels identiques.

2. Polyamide selon la revendication 1, qui peut être obtenu par réaction de 100 parties en poids d'un mélange de quantités à peu près stoechiométriques d'acide téréphtalique, ou d'un dérivé d'amidogène de celui-ci, et d'une diamine de formule I.

3. Polyamide selon la revendication 1, qui peut être obtenu par réaction d'un mélange qui contient, comme diamine de formule I, le diamino-4,13 diéthyl-3,14 hexadécane et éventuellement jusqu'à 5% en poids d'un acide aminocarboxylique de formule II, ou du lactame correspondant, ou encore jusqu'à 30% en poids d'un mélange de quantités à peu près stoechiométriques d'un acide dicarboxylique de formule III, ou d'un dérvié amidogène de celui-ci, et d'une diamine de formule IV.

4. Polyamide selon la revendication 1, qui peut être obtenu par réaction de 100 parties en poids d'un mélange de quantités à peu près stoechiométriques d'acide téréphtalique, ou d'un dérivé amidogène de celui-ci, et d'une diamine de formule I dans laquelle $R_1$ et $R_2$ représentent chacun, indépendamment l'un de l'autre, un alkyle en $C_1—C_4$, ou $R_1$ et $R_2$ forment ensemble et avec l'atome de carbone qui les unit un radical cyclopentyle ou cyclohexyle.

5. Polyamide selon la revendication 1, qui peut être obtenu par réaction de 100 parties en poids d'un mélange de quantités à peu près stoechiométriques d'acide téréphtalique, ou d'un dérivé amidogène de celui-ci, et d'une diamine de formule I dans laquelle $R_1$ représente un radical méthyle ou éthyle et $R_2$ représente un radical éthyle n-propyle ou n-butyle.

6. Polyamide selon la revendication 1, qui peut être obtenu par réaction de 100 parties en poids d'un mélange de quantités à peu près stoechiométriques d'acide téréphtalique, ou d'un dérivé amidogène de celui-ci, et d'une diamide de formule I dans laquelle $R_1$ représente un radical méthyle et $R_2$ un radical éthyle, ou encore $R_1$ représente un radical éthyle et $R_2$ un radical éthyle.

7. Application d'un polyamide selon la revendication 1, à la fabrication d'objets moulés, en particulier de filaments et de fibres, à partir de la masse fondue.

8. Diamine répondant à la formule Ia

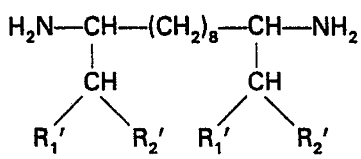
(Ia)

dans laquelle $R'_1$ représente un radical alkyle contenant de 2 à 4 atomes de carbone et $R'_2$ représente un radical alkyle contenant de 1 à 8 atomes de carbone.